Europäisches Patentamt

European Patent Office

Office européen des brevets

(19)

(11) Numéro de publication: **0 197 857**
**B1**

(12) **FASCICULE DE BREVET EUROPÉEN**

(45) Date de publication du fascicule du brevet:
02.08.89

(51) Int. Cl.⁴: **B 01 D 29/14,** B 01 D 35/14

(21) Numéro de dépôt: 86400699.4

(22) Date de dépôt: 01.04.86

(54) Filtre à ajustement à force.

(30) Priorité: 01.04.85 US 718726

(43) Date de publication de la demande:
15.10.86 Bulletin 86/42

(45) Mention de la délivrance du brevet:
02.08.89 Bulletin 89/31

(84) Etats contractants désignés:
DE FR GB IT NL

(56) Documents cité:
DE-A-2 600 339
DE-C-62 550
FR-A-2 140 235
FR-A-2 377 832

(73) Titulaire: **FILTERTEK S.A., 39, rue du Moulin des Bruyères, F-92400 Courbevoie (FR)**

(72) Inventeur: **Cain, Thomas A., 13821 Sunset Ridge, Woodstock Illinois (US)**

(74) Mandataire: **Tony- Durand, Serge, Cabinet Tony-Durand 77, rue Boissière, F-75116 Paris (FR)**

LIBER, STOCKHOLM 1989

EP 0 197 857 B1

## Description

L'Invention est relative aux filtres à ajustement à force.

Il est souvent nécessaire de monter un filtre dans un ensemble en vue de filtrer des fluides passant à travers celui-ci. On peut citer à titre d'exemple celui d'un filtre dans un montage pour injecteur de combustible, en vue de protéger les orifices d'injection vis-à-vis de l'encrassement.

Il existe plusieurs méthodes pour monter un filtre dans un tel ensemble. Un procédé simple est de prévoir un épaulement sur le chemin d'écoulement à travers le montage et de constituer le filtre avec un support de base qui vient en butée contre l'épaulement lorsque le filtre est placé dans l'ensemble. Le support de base peut être maintenu en place contre l'épaulement par différentes méthodes. Une de celles-ci est de prévoir les dimensions du support de telle sorte qu'il puisse être en contact étroit avec une zone élargie en regard dans l'épaulement.

Une difficulté avec un filtre à ajustement à force est que le coefficient d'expansion du matériau utilisé pour constituer le support de base du filtre et celui de l'ensemble le recevant doivent être suffisamment voisins de telle sorte que les changements de température à prévoir dans l'ensemble n'affectent pas l'état de serrage du filtre. Par exemple, un filtre avec un support de base en plastique dans un logement de réception métallique peut devenir sujet à des fuites lorsque la température de l'ensemble augmente et que le métal se dilate plus que le plastique.

Une solution pour éviter des différences des coefficients de dilatation lorsqu'un support en plastique pour le filtre est utilisé dans un ensemble métallique est d'entourer ce support avec un collier métallique. Mais dans ces conditions, le collier et le plastique tendent à glisser l'un par rapport à l'autre lorsque le collier se dilate pendant le chauffage.

La présente invention est relative à un filtre à ajustement à force dans un logement, comportant un organe de filtration monté sur un support et un collier métallique entourant au moins une portion de ce support un tel filtre, connu en soi du document FR-A-2 140 235, se caractérisé en ce que ledit collier est fixé sur le support, au moins en partie, par une ou plusieurs pattes solidaires du collier et qui noyées dans le corps du support. D'autres aspects préférentiels de l'invention concernent la réalisation d'une surface arrondie dans le bord de pénétration du collier. Cela évite le risque que, lorsque le filtre est monté à ajustement à force dans l'ensemble, le bord antérieur du collier puisse découper des particules de la paroi du logement recevant le filtre, qui seraient alors entraînées en aval du filtre de protection.

Avec une portion du collier qui est noyée dans le support, le collier est fixé sur celui-ci de telle sorte que le collier et le support ne peuvent glisser l'un par rapport à l'autre si le filtre et l'ensemble qui le reçoivent sont sujets à des changements de température. Le bord de pénétration arrondi du collier (caractéristique préférentielle) procure une surface métallique lisse en contact entre ce bord et les parois du logement de réception, en évitant l'arrachement de particules de cette paroi pendant le montage.

L'invention sera décrite plus en détail à travers la description qui suit d'un exemple de réalisation donné à titre indicatif et non limitatif, en référence aux dessins annexés et sur lesquels on a représenté:

- à la Figure 1, une vue en perspective d'un mode de réalisation préféré d'un filtre à ajustement à force selon la présente invention;
- à la Figure 2, une vue en coupe partielle de côté, du filtre de la Figure 1.
- à la Figure 3, une vue en coupe prise selon la ligne 3 - 3 de la Figure 2.
- à la Figure 4, une vue en coupe prise selon la ligne 4 - 4 de la Figure 2, montrant le filtre de la Figure monté dans un ensemble:
- à la Figure 5, une vue partielle en coupe selon la ligne 5 - 5 de la Figure 2;
- à la Figure 6, une vue en bout prise selon la ligne 6 - 6 de la Figure 2;
- à la Figure 7, une vue en perspective du collier du filtre de la Figure 1.

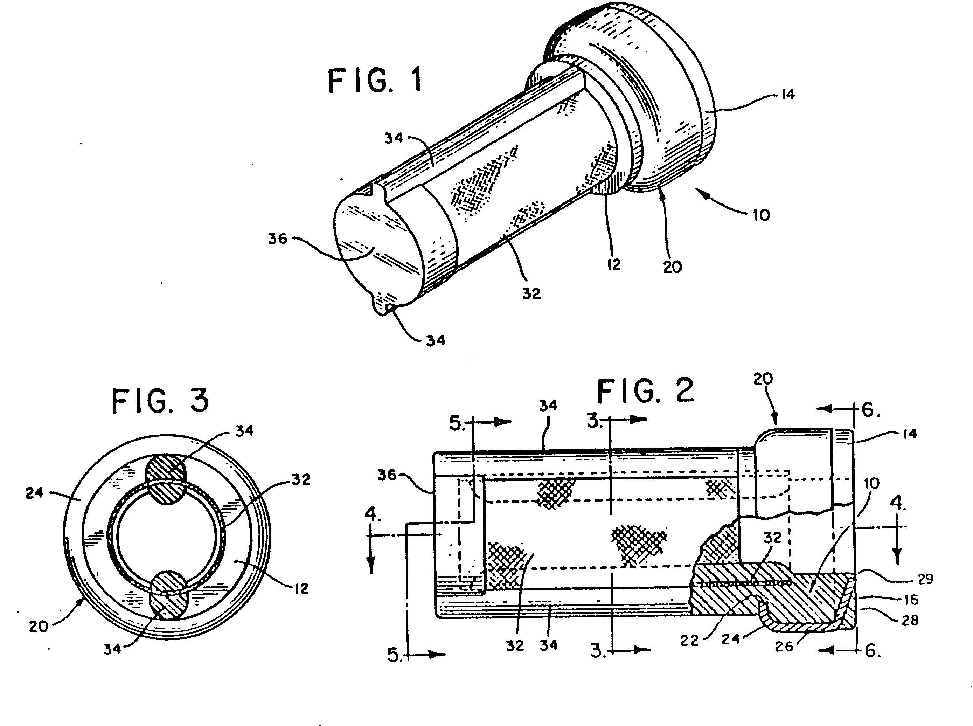

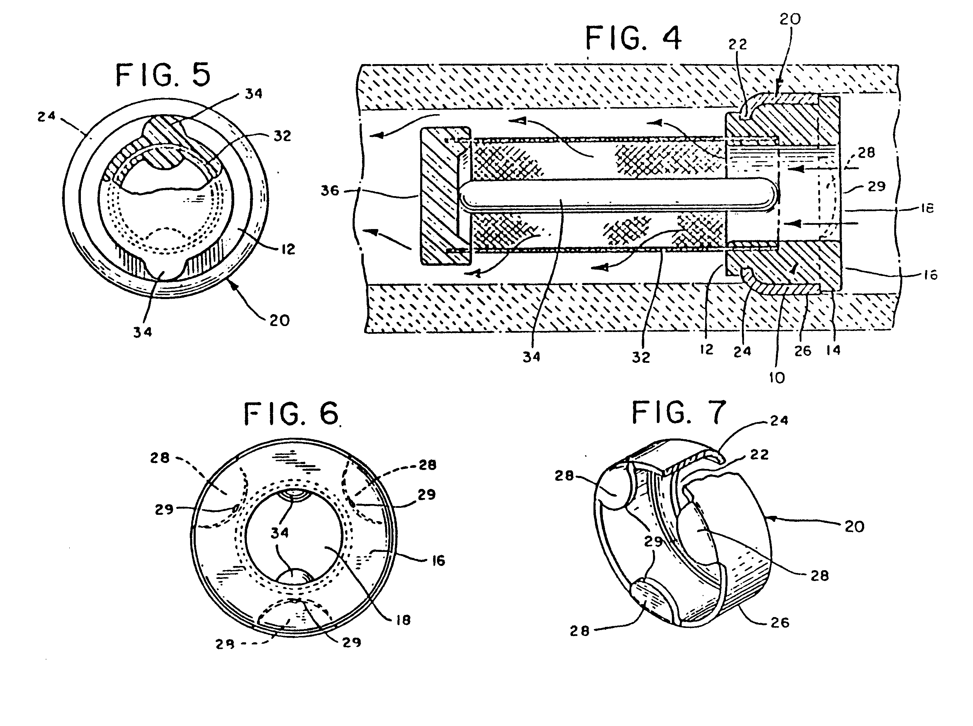

Un filtre adapté pour un montage à ajustement à force dans un logement de réception est représenté sur la Figure 1. Le filtre comprend un support de base en plastique 10 et des nervures 34 supportant un organe de filtration 32. Les nervures de support 34 sont également reliées avec une paroi de fond 36 à l'extrémité du filtre opposée au support 10 qui aide à maintenir l'organe de filtration 32 avec une forme cylindrique. Un trou 18 à travers le support 10 (mieux vu sur la Figure 6) permet au fluide de pénétrer à l'intérieur du filtre.

Entourant une portion du support 10, on prévoit un collier 20, montré en détail sur la Figure 7. Ce collier 20 a un bord frontal 22 recourbé ou embouti. La paroi de côté 26 du collier est ajustée en dimensions de manière à être serrée à force avec le logement en regard qui reçoit le filtre, un tel logement étant prévu dans un ensemble d'injection de carburant.

L'extrémité arrière du collier comporte trois extensions de forme semi-circulaire qui sont pliées intérieurement et dirigées vers l'extrémité ouverte du support 10 de manière à former des pattes d'ancrage 28. Ces pattes 28 sont noyées dans le support 10 de telle sorte que leurs extrémités 29 affleurent à la partie arrière 16 du support. Les pattes 28 et le bord frontal 22 constituent des moyens pour fixer le collier 20 sur le support 10. Comme montré sur la Figure 6, les extrémités 29 des pattes 28 sont visibles et coopèrent avec la partie arrière 16 du support 10 pour constituer une portée rigide apte à permettre l'engagement du filtre à ajustement à force au moyen d'un outil de poussée approprié.

Comme illustré sur la Figure 4, le support 10 est conformé de telle sorte que l'épaulement frontal 12 du support de base 10 soit plus petit en diamètre que la zone d'entrée 24 du collier 20. La section arrière 14 du support 10 s'étend derrière le collier 20 et est moulée avec le même diamètre que les côtés 26 du collier 20 mais, par suite du retrait suivant le moulage, cette section arrière 14 devient légèrement plus petite que le diamètre des côtés 26.

Comme on peut le voir sur les Figures 2, 3, 4 et 5, l'organe de filtration 32 est moulé avec la matière plastique qui forme le support de base 10, les nervures 34 et le fond 36. Le filtre est réalisé avec une technique conventionnelle de moulage sous pression. Le collier 20 et l'organe de filtration 32 sont maintenus en place tandis que le plastique est moulé autour d'eux pour achever le filtre.

La Figure 4 montre le trajet de l'écoulement à travers le filtre une fois que celui-ci a été monté à ajustement à force dans l'ensemble. Le fluide pénètre à travers le trou 18 dans le support de base 10, est filtré lorsqu'il passe à travers l'organe de filtration 32 et s'écoule vers l'aval au-delà du fond d'extrémité 36.

Deux nervures de support 34 sont seulement utilisées dans le mode de réalisation préféré de l'invention, bien que la disposition de ces nervures ne soient pas essentielle. Ces nervures et l'organe de filtration peuvent présenter une forme conique plutôt qu'une forme cylindrique tandis que le support de base lui-même peut supporter une pièce circulaire plane de filtration, sans nervures de support.

Le support 10, les nervures 34 et le support d'extrêmité 36 sont en nylon 6/12 - 35 % de verre bien que de nombreux autres matériaux appropriés bien connus dans la technique, peuvent être utilisés. L'organe de filtration peut être réalisé au moyen d'une toile tissée de monofilaments de polyester, susceptible de retenir des particules de 50 microns et plus. D'autres matériaux de filtration peuvent être utilisés en fonction des applications du filtre envisagé.

Le collier est réalisé en laiton bien que tout autre matériau approprié bien connu dans la technique puisse être utilisé. Dans le mode de réalisation préféré, il comporte trois pattes 28, bien qu'un nombre plus élevé ou plus réduit de pattes de forme appropriée puisse être utilisé. Lorsque les pattes 28 sont noyées dans le support 10, un espace convenable doit être laissé entre ces pattes pour permettre à une quantité suffisante de plastique de relier la partie arrière 14 avec le reste du support.

Le dessin du mode de réalisation préféré présente de nombreux avantages. Comme déjà mentionné, la forme arrondie de la partie frontale 24 permet une pénétration à engagement doux du filtre dans son logement. L'épaulement en plastique 12 et la partie arrière 14 du support 10 sont plus petits que le logement de telle sorte que la région d'entrée du logement ne soit pas rayée par une quelconque particule de plastique lorsque le filtre est monté à force dans l'ensemble.

Le filtre est de construction simple et assure un ajustement à force qui se maintient au cours des changements de température de l'ensemble sans nécessiter aucun autre moyen pour maintenir le filtre en place dans celui-ci. Le bord frontal 22 et les pattes d'ancrage 28 du collier 20 sont noyés dans le plastique du support 10 et servent à maintenir le collier 20 contre celui-ci même lorsque se produisent des changements de température dans le filtre.

**Revendications**

1. Filtre à ajustement à force dans un logement, comportant un organe de filtration (32) monté sur un support (10) et un collier métallique (20) entourant au moins une portion de ce support, caractérisé en ce que ce collier (20) est fixé sur ce support (10), au moins en partie, par une ou plusieurs pattes (28) solidaires de ce collier et qui sont noyées dans le corps de ce support (10).

2. Filtre selon la revendication 1 dont le support (10) est aménagé pour s'engager dans un logement, et caractérisé en ce que le collier métallique (20) comporte un bord frontal (22) noyé dans le corps du support (10) et une partie d'entrée arrondie, adjacente à ce bord frontal (22), de manière à procurer une surface métallique lisse en contact avec la zone d'entrée et la paroi du logement, propre à éviter l'arrachement de particules à partir des côtés de ce logement pendant la mise en place à ajustement serré du filtre dans celui-ci.

3. Filtre selon l'une des revendications précédentes, caractérisé en ce que les extrémités des pattes (28), noyées dans le corps du support (10), sont en alignement avec la partie arrière (16) de ce support.

4. Filtre selon l'une des revendications précédentes, caractérisé en ce que les pattes (28) s'étendent en des points situés sensiblement au niveau de la partie arrière du support (10) et constituent une surface convenable d'appui pour l'application d'une force pour la mise en place à ajustement à force du filtre.

5. Filtre selon l'une des revendications précédentes, caractérisé en ce que le support (10) est réalisé en matière plastique et en ce que les pattes (28) sont noyées dans le support par moulage par injection.

6. Filtre selon l'une des revendications précédentes, caractérisé en ce que le support (10) comporte un épaulement frontal plus petit que le diamètre du collier (20).

7. Filtre selon l'une des revendications précédentes, caractérisé en ce qu'une portion arrière du support (10) s'étend derrière le collier (20) et que cette portion du support à un diamètre plus petit que celle de ce collier.

8. Filtre selon l'une des revendications précédentes, caractérisé en ce qu'il comporte des nervures (34) liées au support (10) et portant l'organe de filtration (32).

9. Filtre selon l'une des revendications précédentes, caractérisé en ce que les nervures (34) se prolongent par un fond d'extrémité (36).

10. Filtre selon l'une des revendications précédentes, caractérisé en ce que les nervures (34) et l'organe de filtration (32) forment une surface cylindrique.

11. Filtre selon l'une des revendications précédentes, caractérisé en ce que l'organe de filtration (32) est constitué d'un tissu de monofilaments de polyester.

12. Filtre selon l'une des revendications précédentes, caractérisé en ce que l'organe de filtration (32) est susceptible de retenir des particules de 50 µm ou plus.


**Patentansprüche**

1. Filter zur Aufnahme unter Preßpassung in einer Lagerung, mit einem an einem Träger (10) angebrachten Filterorgan (32) und mit einem den Träger wenigstens teilweise umgebenden metallischen Ringteil (20), dadurch gekennzeichnet, daß dieser Ringteil (20) auf diesem Träger (10) wenigstens teilweise mittels einer oder mehrerer Ankerklauen (28) befestigt ist, welche fest mit diesem verbunden und in den Körper dieses Trägers (10) versenkt sind.

2. Filter nach Anspruch 1, dessen Träger zur Aufnahme in eine Lagerung ausgebildet ist, dadurch gekennzeichnet, daß der metallische Ringteil (20) eine in den Körper des Trägers (10) versenkte Stirnkante (22) und einen an diese Stirnkante (22) angrenzenden, gerundeten Eingangsteil aufweist, derart, daß eine metallische, glatte, für einen Kontakt mit der Eingangszone und der Wandung des Lagerteils bestimmte Oberfläche gebildet ist, welche geeignet ist, ein Losreißen von Partikeln während des Einsetzens des Filters unter Preßpassung in das Lagerteil zu vermeiden.

3. Filter nach einem der vorhergehenden Ansprüche, dadurch gekennzeichnet, daß die Enden der in den Körper des Trägerteils (10) versenkten Klauen (28) mit dem rückwärtigen Teil (16) des Trägers fluchten.

4. Filter nach einem der vorhergehenden Ansprüche, dadurch gekennzeichnet, daß sich die Klauen (28) bis auf merklich auf dem Niveau des rückwärtigen Teils des Trägers (10) liegende Bereiche erstrecken und eine als Stütze geeignete Oberfläche zur Aufnahme einer für das Einbringen des Filters in seine Lage erforderlichen Kraft bilden.

5. Filter nach einem der vorhergehenden Ansprüche, dadurch gekennzeichnet, daß der Trägerteil (10) aus Kunststoff besteht, und daß die Klauen (28) durch Spritzgießen in dem Trägerteil versenkt sind.

6. Filter nach einem der vorhergehenden Ansprüche, dadurch gekennzeichnet, daß der Trägerteil (10) eine Schulter aufweist, die kleiner als der Durchmesser des Ringteiles (20) ist.

7. Filter nach einem der vorhergehenden Ansprüche, dadurch gekennzeichnet, daß sich ein rückwärtiger Teil des Trägerteils (10) hinter den Ringteil (20) erstreckt, und daß dieser Teil des Trägerteils einen kleineren Durchmesser als derjenige des Ringteils hat.

8. Filter nach einem der vorhergehenden Ansprüche, dadurch gekennzeichnet, daß mit dem Trägerteil (10) verbundene, das Filterorgan (32) tragende Rippen (34) vorgesehen sind.

9. Filter nach einem der vorhergehenden Ansprüche, dadurch gekennzeichnet, daß die Rippen (34) durch ein Endbodenteil (36) verlängert sind.

10. Filter nach einem der vorhergehenden Ansprüche, dadurch gekennzeichnet, daß die Rippen (34) und das Filterorgan (32) eine zylindrische Oberfläche bilden.

11. Filter nach einem der vorhergehenden Ansprüche, dadurch gekennzeichnet, daß das Filterorgan (32) aus einem monofilen Polyestergewebe gebildet ist.

12. Filter nach einem der vorhergehenden Ansprüche, dadurch gekennzeichnet, daß das Filterorgan (32) zum Zurückhalten von Partikeln von 50 µm und mehr geeignet ist.


**Claims**

1. Filter which is force-fitted within a housing, comprising a filtration element (32) mounted on a support (10) and a metallic collar (20) surrounding at least a portion of said support, characterized in that said collar (20) is fixed on said support (10), at least partly, by means of one or a number of lugs (28) which are integral with said collar and are embedded in the body of said support (10).

2. Filter in accordance with claim 1 in which the support (10) is adapted to engage in a housing, and characterized in that the metallic collar (20) has a front edge (22) embedded in the body of the support (10) and a rounded entrance portion adjacent to said front edge (22) so as to provide a smooth metallic surface in contact with the entrance zone and the wall of the housing, which is designed to prevent removal of particles from the sides of said housing during the tight-fit positioning of the filter within this latter.

3. Filter in accordance with one of the preceding claims, characterized in that the ends of the lugs (28) which are embedded in the body of the support (10) are in alignment with the rear portion (16) of said support.

4. Filter in accordance with one of the preceding claims, characterized in that the lugs (28) extend at points located substantially at the level of the rear portion of the support (10) and constitute a suitable bearing surface for application of a force for the force-fit positioning of the filter.

5. Filter in accordance with one of the preceding claims, characterized in that the support (10) is formed of plastic material and that the lugs (28) are embedded in the support by injection moulding.

6. Filter in accordance with one of the preceding claims, characterized in that the support (10) has a front shouldered portion which is smaller than the diameter of the collar (20).

7. Filter in accordance with one of the preceding claims, characterized in that a rear portion of the support (10) extends behind the collar (20) and that said portion of the support has a smaller diameter than that of said collar.

8. Filter in accordance with one of the preceding claims, characterized in that it comprises ribs (34) which are joined to the support (10) and carry the filtration element (32).

9. Filter in accordance with one of the preceding claims, characterized in that the ribs (34) have an extension in the form of an end-wall (36).

10. Filter in accordance with one of the preceding claims, characterized in that the ribs (34) and the filtration element (32) form a cylindrical surface.

11. Filter in accordance with one of the preceding claims, characterized in that the filtration element (32) is constituted by a woven textile fabric of polyester mono filaments.

12. Filter in accordance with one of the preceding claims, characterized in that the filtration element (32) is capable of retaining particles of 50 µm or more.

FIG. 1

34

36

32

12

20

10

14

FIG. 3

34

24

32

12

20

34

FIG. 2

5.

34

3.

20

6.

36

14

4.

4.

10

29

32

16

28

32

34

3.

22

24

26

5.

6.

EP 0 197 857 B1

FIG. 4

FIG. 5

FIG. 6

FIG. 7